# EUROPEAN PATENT SPECIFICATION

(11) **EP 2 289 312 B1**
(45) Date of publication and mention of the grant of the patent: **31.08.2016**
(21) Application number: 10170892.3
(22) Date of filing: 27.07.2010
(51) Int. Cl.: A01K 15/02, A61D 9/00

(54) **Rehabilitation and/or training device for equines, particularly for horses**
Rehabilitations-und/oder Trainingsgerät für Einhufer, insbesondere Pferde
Dispositif de rehabilitation et/ou entrainement pour équines, en particulier chevaux

(30) Priority: 07.08.2009 IT RM20090433
(43) Date of publication of application: 02.03.2011
(73) Proprietor: Casino, Alessandra, 75100 Matera (IT)
(72) Inventor: Casino, Alessandra, I-75100, Matera (IT); Simeone, Emanuele, I-00015, Monterotondo (Roma) (IT)
(74) Representative: Carangelo, Pierluigi

(56) References cited:
- DE-A1- 19 632 336
- DE-A1-102005 041 485
- US-A- 5 127 213
- US-A- 5 769 030

## Description

The present invention refers to a rehabilitation and/or training device for equines, particularly for horses.

In the technical field of rehabilitation and/or training of equines, it is strongly desired to have devices that allow the rehabilitation and/or training of an equine in a targeted and efficient manner. For example, with reference to the field of horse-riding or horse racing, and more in particular to the field of competitive horse-riding, it is very important to train the horses in a way suitable for obtaining optimal performances from them, for example, in a race or competition. Moreover, it is quite common for the owner or for the person looking after a competitive race horse, which very often as well as having a substantial sentimental value also has a considerable economical value, to have to deal with the problem of how to manage an injury or a disease and the subsequent healing period.

In particular, it is quite common for a race-horse to get injured during training or during sport competitions due to incorrect moving habits that it takes up for example due to the requirement of competitive performances. Indeed, it often occurs that the excessive work load causes a stiffening of the joints of the horse, particularly the joints situated in the upper part of the equine, such as the spine, hips and shoulders joints. The stiffening i.e. the reduced mobility of the joints makes the horse take up incorrect moving habits that lead to an overloading of the limbs of the horse and that over time can lead to injuries, inflammations or pains to the horse itself.

Amongst the rehabilitation and/or training devices for equines of the prior art, in particular for horses, devices of the electromechanical type are common, such as electrostimulators, vibrating massagers or other similar devices, which exploit for example radio waves or shock waves. Such devices are commonly used for strengthening muscles or for alleviating pain due to a trauma the animal has suffered. These devices are intended to be used on a substantially still horse and therefore have the drawback of not intervening on the mechanics of the movement so as to correct or induce a correct movement in the different paces of the horse.

Other systems of the prior art, mainly used for training, are based upon the use of particular harnesses normally comprising reins connected to the belly belt and to the bit of the horse, respectively. Such systems however are normally quite constrictive since they usually force the horse to shorten and bend its neck so as to bring its nose towards its chest, with consequent negative effects on the agility of the joints and on the muscular tension of the animal. A further drawback of such harnesses and of the other aforementioned devices of the prior art, lies in the fact that the results obtained using them do not last but on the contrary disappear relatively quickly once they are not used any more.

United States patent No. 5,127,213 describes a training device that is suitable for training horses. Specifically, such a device comprises a blanket-type element intended to be applied onto the back of a horse. The blanket-type element has an upper part provided with a plurality of pockets intended to house respective weights and a lower part that is padded, for example with wool, provided for being arranged in contact with the back of the horse to provide it with a certain amount of comfort when the blanket-type element is applied to it. Moreover, the training device comprises a plurality of straps, of a type which is not described in detail in the aforementioned patent, only having the function of allowing the blanket-type element to be fastened to the horse. A training device of the type mentioned above with a blanket-type element, makes it possible to tone up the muscles of the horse by applying weights. However, such a device does not intervene on the mechanics of the movement so as to correct or induce a correct movement in the different paces of the horse and simultaneously to avoid overtiring of the joints of the horse itself.

Patent document US 5769030 discloses an animal conditioning and training apparatus comprising a weighted vest to be arranged around the torso of the animal. Weighted vest includes a stuffing or cushioning for protection of the animal which is disposed about weights provided in the vest. Further, the apparatus disclosed in such document comprises a collar to be fitted around the neck of the animal.

Patent document DE 102005041485 discloses a massage device for an animal including inflatable pads for massage which can be alternately pressurized/depressurized via a pumping system to massage a desired region of the animal.

One purpose of the present invention is that of providing a device for training and/or rehabilitating equines that is capable of avoiding the aforementioned drawbacks with reference to the prior art or of at least partially reducing the effects of such drawbacks.

Such a purpose is achieved with a training and/or rehabilitation device for equines as defined in the attached claim 1 in its most general form and in the dependent claims in some particular embodiments.

The invention shall become clearer from the following detailed description of its embodiments, given as an example and therefore not for limiting purposes in relation to the attached drawings, in which:
- figure 1 is a perspective view showing a rehabilitation and/or training device for equines according to an embodiment of the present invention applied to an equine;
- figure 2 is a top side view of the equine and of the device of figure 1, in which the equine is partially represented;
- figure 3 is a top front view, showing a second embodiment of a rehabilitation and/or training device for equines according to the present invention applied to an equine, the equine being seen from the tail side;
- figure 4 is a perspective view in which part of the equine and the device of figure 3 are seen from a different angle with respect to such a figure; and
- figure 5 is a top front view showing a third embodiment of a rehabilitation and/or training device for equines according to the present invention applied to an equine, the equine being seen from the tail side.

In the attached figures, equal or similar elements shall be indicated with the same reference numerals.

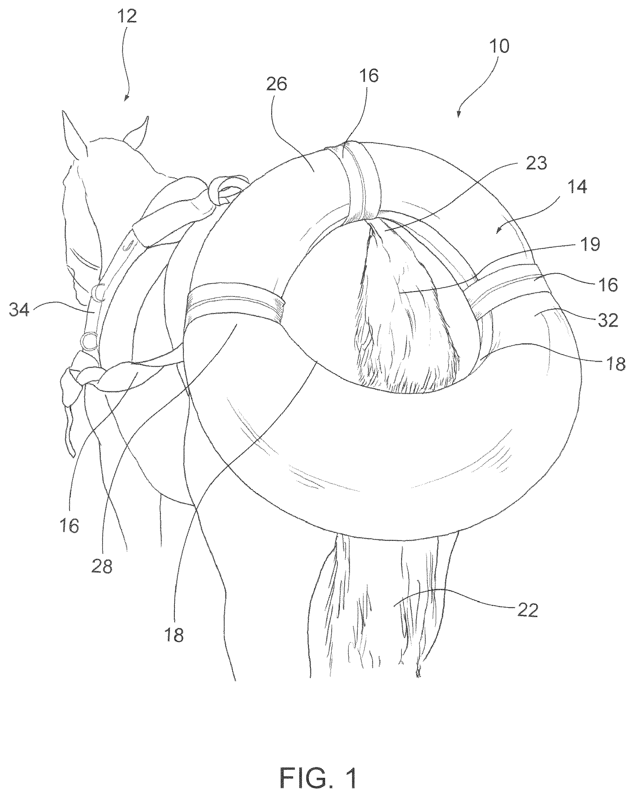

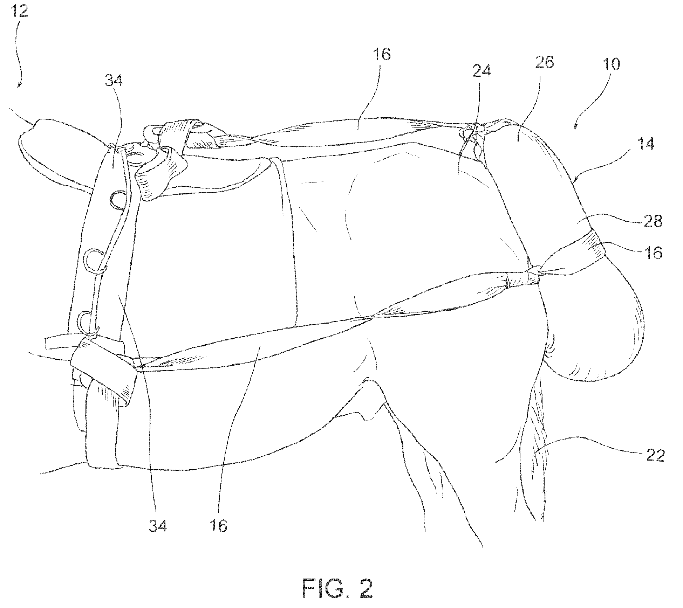

Initially referring to figures 1 and 2, reference numeral 10 generally indicates a rehabilitation and/or training device for equines according to one embodiment of the present invention. Although the device 10 is particularly recommended for horses, such a device, can in principle, advantageously be applied also to other types of equines, such as donkeys, mules, zebras and the like. In figure 1, the device 10 is applied to an equine, in the example a horse 12. As can be observed in such a figure, the device 10 comprises at least one compression element 14 and connection elements 16 to couple the compression element to the horse. In particular, the connection elements 16 are suitable for coupling the compression element with the horse so that such an element is supported, preferably in a resting relationship, by the horse itself. The compression element advantageously comprises an elastic compression cushion 14.

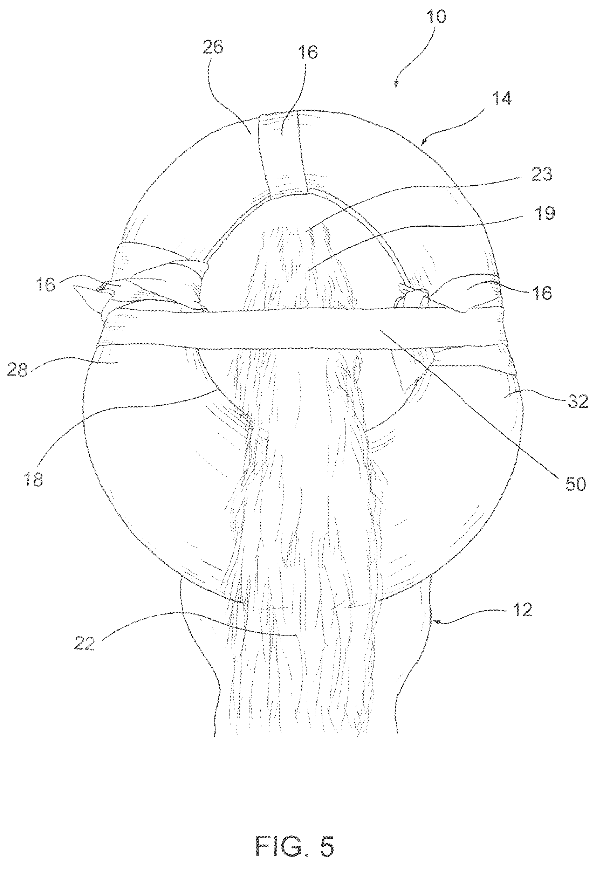

According to one advantageous embodiment, the device 10 comprises a recess 18, or tail recess 18, intended to be operatively arranged facing a region of the equine comprising an end portion 19 of the tail 22 of the horse 12. More in particular such a region of the equine comprises a joining portion 23 of the tail 22. It should be noted that the recess 18 does not only have the simple function of allowing a better coupling of the cushion with the equine. Indeed, such a recess is mainly provided with the purpose of preventing the cushion 14, when the device 10 is used, from exerting a pressure in a specific region of the equine substantially situated at one end of the spine of the equine. This advantageously makes it possible to preserve a suitable mobility of the spine of the horse 12 avoiding or in any case minimising possible limitations or obstacles of the mobility of the spine itself due to the action of the cushion 14. According to an even more advantageous embodiment, the recess 18 comprises a through opening 18 or tail opening 18, suitable for having the tail 22 of the horse passed through it (figure 5), in particular, while the device 10 is being used. Concerning this, it is worth noting that in the attached figures 1-4, for the sole purpose of representing the structure of the device 10 more clearly, the tail 22 does not pass through the opening 18.

The cushion 14 is shaped like a closed loop. Such a characteristic indeed makes it possible for the cushion 14 to advantageously adapt in an optimal manner to the shape of the back part of the equine so as to allow an effective pushing action of the cushion on the glutei and on the femoral muscles aimed at inducing the movement of the back legs and at facilitating the movement of the equine. In the example of figure 1, the cushion is substantially doughnut-shaped or rounded-ring shaped and extends around the through opening 18. In particular, such an opening in the example is substantially circular-shaped.

The cushion 14 is an inflatable cushion, preferably tubular-shaped. The cushion is preferably inflatable with a gas, such as air. It should be observed that the fact of providing a cushion that can be inflated with a gas, makes it possible to advantageously obtain an optimal elasticity of the cushion 14 and to obtain an excellent amount of comfort for the equine during the use of the device at the same time. Moreover, a cushion that can be inflated with a gas makes it possible to have a training/rehabilitation device that is particularly practical to use, since the cushion can be deflated easily and kept in a compact and non bulky manner when the training device must be stored or transported.

As can be observed for example, in figure 2, the cushion 14 is suitable for being applied onto a compression region of the horse 12 including at least one part of the croup 24, i.e. a part of the horse 12 comprised between the loins, the joining portion of the tail and the hips. More in particular, the compression region includes at least one portion of the croup situated above the joining portion of the tail. According to one advantageous embodiment, such a region also comprises the region of the ischiatic tuberosities of the horse 12. It is worth observing that the cushion 14 is suitable for being applied onto the aforementioned compression region to exert a compression action on such a region during a pace of the horse. Such a compression action is suitable for inducing a flexing or excursion of at least the lumbosacral joint of the horse. More advantageously, according to one embodiment, such a compression action is suitable for also inducing a flexing of the sacrococcygeal joints and of the hips of the horse 12. In other words, the cushion 14, following a movement of the horse, is suitable for exerting a compression action suitable for modifying a pace of the horse. For the purpose of the present description with the term pace we mean a gait of the horse like the walk, trot, gallop and the like. Concerning this, it is worth observing that the device 10 is particularly recommended for training and/or rehabilitation during a walk pace. However, even if with less results, such a device can also be used with other types of paces, such as the trot and gallop.

As can be observed for example in figure 2, according to one advantageous embodiment, the device 10 is such that the compression region includes, as well as at least one part of the croup 24, also at least one part of the glutei and/or of the femoral muscles.

The connection elements 16 advantageously comprise elastic connection elements, such as elastic ropes or cables or spring elements. It should be observed that the connection elements 16, as well as having the function of coupling the cushion 14 with the equine, also advantageously carry out a training/rehabilitation function in synergy with such a cushion. In the example, the elastic connection elements even more advantageously comprise a plurality of elastic straps or bands 16. In figure 1, the device 10 in particular comprises three elastic bands 16 that are or that can be constrained to the cushion 14. Specifically, one of such bands is constrained at a fixing portion 26 relatively at the centre of the cushion 14, whereas the other two bands are respectively fixed at two side fixing portions 28, 32 that are arranged on two sides opposite with respect to the central fixing portion. Even more specifically, in the example, the side fixing portions are preferably angularly spaced by around 90° with respect to the central fixing portion. With particular reference to figure 2, it can be observed that the bands 16 each have two opposite end portions fixed or that can be fixed respectively to the cushion 14 and to support elements 34 coupled with the horse 12. In other words, the bands 16 are suitable for being operatively arranged between the cushion 14 and support elements coupled with the horse at a certain distance from such a cushion. Preferably, such support elements comprise a strapping 34 wrapped around the horse, preferably in an intermediate position between the front and back limbs, such as a leather strapping or a belly belt, and/or a saddle mounted on the horse. More in particular, in the example each band 16 has a respective end portion fixed to the strapping 34, and an opposite end portion fixed to the cushion 14. In the example, the bands 16 are connected so that at least one of such bands extends along the back of the horse 12, whereas the other two bands each extend substantially horizontally along a respective side of the horse. It is worth observing that when the device 10 is applied to the horse, the bands 16 are arranged at least partially in tension so as to allow for example the support of the cushion and to allow a suitable contact between the latter and the horse. According to one advantageous embodiment, the tension of such bands can be modified according to particular rehabilitation and/or training requirements.

Now that a structure of the device 10 has been described, we shall hereafter describe an example of operation of such a device 10.

Let us consider the case in which the device 10 is used for training and/or rehabilitating during the walk pace.

When the horse starts to move, specifically when it starts walking, the compression region cooperates with the cushion 14 elastically deforming it. Advantageously, the deformation of the cushion is also accompanied by an elastic deformation of at least one part of the elastic connection elements. In response to the aforementioned elastic deformation, the cushion exerts an elastic reaction force upon the compression region suitable for modifying the walk of the horse. In other words, the elastic cushion 14 and the elastic connection elements 16 are such as to overall form an elastic system suitable for taking up a configuration in which both the connection elements and the elastic cushion are elastically deformed to exert an elastic reaction force. More in particular, such an elastic reaction force, by acting at least upon the croup, makes the horse to flex the lumbosacral, sacrococcygeal and hip joints, involving at least the diaphragm and, more advantageously, also the psoas and the abdominal muscles, particularly the oblique abdominal muscles. In other words, the elastic reaction force exerted by the cushion 14 at least causes the contraction of the diaphragm which, in response to such a contraction, relaxes, causing an excursion of the aforementioned joints that is such as to increase the deformation of the cushion and, consequently, the elastic reaction force exerted by the cushion itself. In other words, the device 10, by acting upon the compression region, induces a contraction/relaxation action of the diaphragm that progressively amplifies the substantially cyclical action of the elastic reaction force transmitted through the elastic cushion. In such a way, the device 10 makes it possible, within a certain limit, to progressively amplify the excursion of such joints or at least of the lumbosacral joint.
Again in other words, the device 10, by acting upon the pelvis muscles and consequently upon the diaphragm and upon the abdominal muscles, is suitable for progressively amplifying the movement of joint excursion of the lumbosacral, sacrococcygeal and hip joints of the horse. In the case of a walk pace, this makes it possible to amplify the side to side, anteroposterior and vertical movement components typical of walking. In such a way walking becomes ergonomic and comfortable.
Based upon what has been described above, it should thus be possible to understand how a rehabilitation and/or training device for equines according to the present invention is able to overcome or at least minimise the aforementioned drawbacks with reference to the prior art.

The fact of providing a training and/or rehabilitation device including at least one elastic compression cushion and elastic connection elements to couple the cushion with the equine that are suitable for cooperating in synergy with the cushion so as to carry out a training/rehabilitation function and that are suitable for forming, together with the cushion, an elastic system such as to elastically deform during a pace of the equine to exert an elastic reaction force upon a compression region including at least one part of the croup, advantageously makes it possible to widen the joint excursion movement of the lumbosacral joint, and more advantageously also of the sacrococcygeal joints and of the hips of the equine, and to consequently obtain a greater agility and mobility of such joints. More in particular, a device having such characteristics, makes it possible to facilitate and to induce a correct movement of the joints of the horse inducing a contraction/relaxation action of the diaphragm that progressively amplifies the substantially cyclic action of the elastic reaction force. This makes it possible to induce the equine to take up correct movement habits that reduce the occurrence of injuries, inflammations or pains and make it possible to obtain better performances with the equine itself. Moreover, it should be observed that the fact of providing in the cushion a recess intended to be facing a joining portion of the tail of the horse, makes it possible to improve the mobility of the spine of the equine considerably increasing the effectiveness of the training/rehabilitation device.

It is worth underlining that a rehabilitation and/or training device according to the present invention is not coercive or constrictive. Contrarily, a device of such a type is particularly comfortable for the equine and makes it easier to learn new movement processes that will become part of the motor capabilities of the animal. Muscle fatigue is thus reduced, increasing performance. Indeed, less energy used corresponds to a lower probability of fatigue, inflammation and of pain.

The fact of providing a compression element suitable for acting upon a compression region comprising at least one of the parts of the croup makes it possible to leave the neck and the head of the equine free with consequent beneficial effects on the agility of the joints and on the muscular tension of the animal.

It is obvious that there can be modifications and/or variants to what has been described above purely as an example and not for limiting purposes.

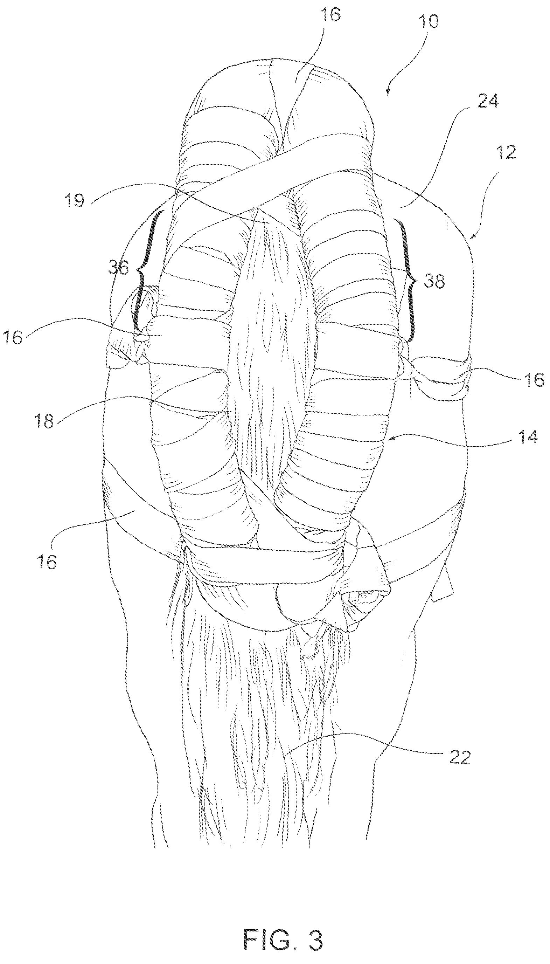

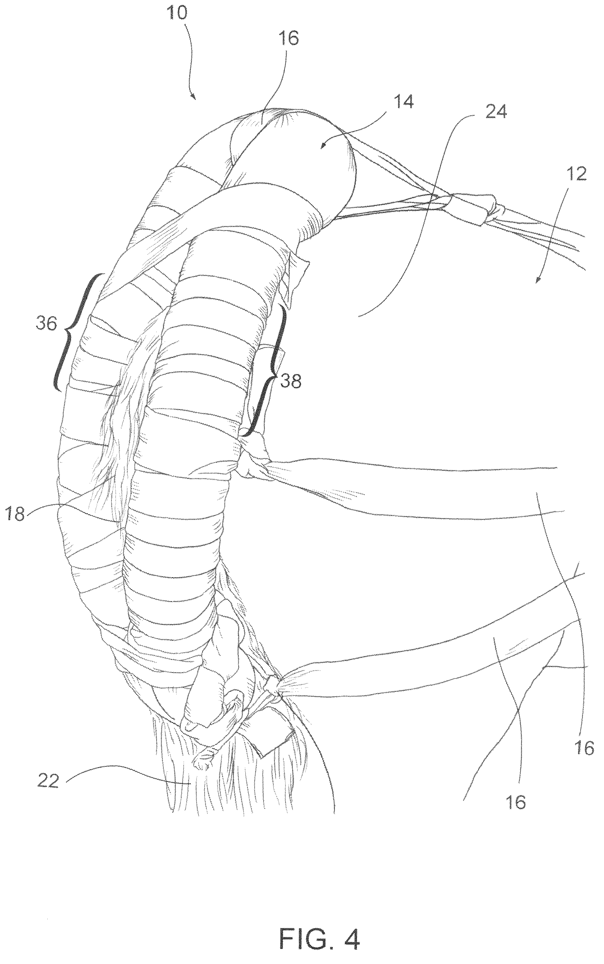

Figures 3 and 4 illustrate a second embodiment of a rehabilitation and/or training device for equines according to the present invention. According to such an embodiment, in addition or alternatively with respect to what has previously been described and/or illustrated, the compression element 14, again in the example a compression cushion 14, comprises a first and a second portion of element, in the example a first and a second portion of cushion 36, 38 (figure 3) suitable for being operatively arranged in contact with two respective portions of the horse situated near to the tail 22, substantially at the regions of the ischiatic tuberosities. The application of the cushion 14 on the ischiatic tuberosities regions makes it possible to advantageously keep an almost constant contact with the soft structures that are inserted inside, like for example the pelvic bridge, amplifying the action induced by the device 10 on the abdominal and lumbosacral areas and the consequent activation of at least the diaphragm and more advantageously also of the abdominal muscles.

In the embodiment of figure 3 and 4, in particular, it can be observed, that the cushion 14 has a narrow and elongated shape. More in particular, the cushion 14 is shaped like a squashed closed loop in which the through opening 18 is shaped like an elongated eyelet. In other words, the cushion is a loop essentially shaped like an almond. Specifically, such a cushion is preferably connected or can be connected to the saddle and/or to the belly belt through five elastic bands. In the example, two bands 16 are connected or can be connected to the strapping 34 along each of the sides of the horse and a band 16 is or can be connected along the back.

With particular reference to the example of figure 4, it can also be seen that the cushion 14, when it is coupled with the horse 12, is preferably curved substantially in an arc so as to optimise the flexing action of the lumbosacral, coccigee and hip joints that is induced by the device 10. It is worth noting that also in figures 3 and 4, for the sole purpose of representing the structure of the device 10 more clearly, the tail of the horse does not pass through the through opening 18.

Figure 5 represents a further embodiment of a training and/or rehabilitation device for equines according to the present invention. According to such an embodiment, in addition or as an alternative with respect to what has previously been described and/or illustrated, the device 10 comprises elements 50 for holding or controlling the shape, suitable for limiting the formation of substantially permanent deformations of the compression element 14 or, in the example, of the compression cushion 14. In such a way the probability of a progressive reduction of efficiency of the device 10 related to the variation, with use, of the original shape of the cushion 14, is reduced. With reference to the embodiment of figure 5, the shape control elements comprise at least one band 50, in the example an elastic band, preferably wrapped around the cushion 14 so as to embrace two opposite portions of such a cushion. However, the shape control elements can in general also comprise elements different from an elastic band. For example, according to one currently preferred embodiment (not illustrated in the figures), such elements include a casing, for example a casing made from a fabric or from an elastomer such as Neoprene, suitable for being fitted onto the cushion 14 so as to partially or completely receive such a cushion.

Without affecting the principle of the invention, the embodiments and the manufacture details can be widely varied with respect to what has been described and illustrated purely as a non limiting example, without for this reason departing from the scope of protection of the invention as defined by the attached claims.

## Claims

1. Rehabilitation and/or training device (10) for equines, particularly for horses, comprising at least one compression element (14) and connection elements (16) to couple the compression element (14) with the equine (12), said compression element (14) comprising an elastic cushion (14) suitable for being applied onto a compression region of the equine (12) including at least one part of the croup (24) to exert a compression action on such a region during a pace of the equine, said connection elements comprising a plurality of elastic connection elements (16) each having an end portion connected to the elastic cushion (14) and an opposite end portion connected or connectable to support elements (34) suitable for being coupled with the equine at a certain distance from said cushion,
said device (10) being **characterised in that** the elastic cushion is an inflatable cushion which is shaped as a closed loop extending around a through opening which is suitable for being arranged to face a joining portion (23) of the tail (22) of the equine and which is adapted to have said tail passed through it, the elastic cushion and the elastic connection elements being such as to overall form an elastic system suitable for taking up a configuration in which said connection elements (16) and said cushion (14) are elastically deformed to exert onto said compression region an elastic reaction force suitable for causing a flexing of at least the lumbosacral joint of the equine.

2. Rehabilitation and/or training device (10) for equines according to any one of the previous claims, wherein said elastic connection elements (16) comprise a first connection element constrained or constrainable to a fixing portion (26) relatively at the centre of said cushion and a second and third connection element that are respectively constrained or constrainable to two side fixing portions (28, 32) that are arranged on two sides that are opposite with respect to the central fixing portion (26).

3. Rehabilitation and/or training device (10) for equines according to any one of the preceding claims, wherein said elastic cushion (14) is shaped like a squashed closed loop so as to have a narrow and elongated shape.

4. Rehabilitation and/or training device (10) for equines according to any one of the previous claims, wherein said cushion (14) is a cushion that is or that can be inflated with gas.

5. Rehabilitation and/or training device (10) for equines according to any one of the previous claims, wherein said connection elements (16) are arranged between said compression element (14) and said support elements (34).

6. Rehabilitation and/or training device (10) for equines according to any one of the previous claims, comprising shape control elements (50) suitable for limiting the formation of substantially permanent deformations of said elastic cushion (14).

## Patentansprüche

1. Rehabilitations- und/oder Trainingsvorrichtung (10) für Equidae, insbesondere für Pferde, umfassend mindestens ein Druckglied (14) und Verbindungsglieder (16) zum Koppeln des Druckglieds (14) mit dem Pferd (12), wobei das Druckglied (14) ein elastisches Kissen (14) umfasst, das geeignet ist, um an einen Druckbereich des Pferds (12) angelegt zu werden, der mindestens einen Teil der Kruppe (24) umfasst, um eine Kompression auf solch einen Bereich während einer Gangart des Pferdes auszuüben, wobei die Verbindungsglieder eine Vielzahl elastischer Verbindungsglieder (16) umfassen, von denen jedes einen Endabschnitt hat, der mit dem elastischen Kissen (14) verbunden ist, und einen entgegengesetzten Endabschnitt, der mit Stützgliedern (34) verbunden oder verbindbar ist, geeignet, um mit dem Pferd in einem bestimmten Abstand von dem Kissen gekoppelt zu werden,
wobei die Vorrichtung (10) **dadurch gekennzeichnet ist, dass** das elastische Kissen ein aufblasbares Kissen ist, das als geschlossene, sich um eine Öffnung herum erstreckende Schleife geformt ist, die geeignet ist, um einem Verbindungsabschnitt (23) des Schweifs (22) des Pferds gegenüber zu liegen, und das so angepasst ist, dass der Schweif durch es hindurchgeführt wird, wobei das elastische Kissen und die elastischen Verbindungsglieder insgesamt ein elastisches System bilden, das geeignet ist, um eine Konfiguration aufzunehmen, in der die Verbindungsglieder (16) und das Kissen (14) elastisch verformt sind bzw. werden, um eine elastische Reaktionskraft auf den Druckbereich auszuüben, die geeignet ist, eine Beugung mindestens des Lumbosakralgelenks des Pferds zu bewirken.

2. Rehabilitations- und/oder Trainingsvorrichtung (10) für Equidae nach einem der vorangehenden Ansprüche, wobei die elastischen Verbindungsglieder (16) ein erstes Verbindungsglied, das beschränkt oder beschränkbar auf einen Befestigungsabschnitt (26) ist, der relativ im Zentrum des Kissens ist, und ein zweites und drittes Verbindungsglied umfassen, die jeweils beschränkt oder beschränkbar sind auf zwei Seiten-Befestigungsabschnitte (28, 32), die auf zwei Seiten angeordnet sind, die sich in Bezug auf den zentralen Befestigungsabschnitt (26) gegenüberliegen.

3. Rehabilitations- und/oder Trainingsvorrichtung (10) für Equidae nach einem der vorangehenden Ansprüche, wobei das elastische Kissen (14) wie eine zusammengequetschte geschlossene Schleife geformt ist, so dass es eine schmale und gestreckte Form hat.

4. Rehabilitations- und/oder Trainingsvorrichtung (10) für Equidae nach einem der vorangehenden Ansprüche, wobei das Kissen (14) ein Kissen ist, das mit Gas aufgeblasen ist oder werden kann.

5. Rehabilitations- und/oder Trainingsvorrichtung (10) für Equidae nach einem der vorangehenden Ansprüche, wobei die Verbindungsglieder (16) zwischen dem Druckglied (14) und den Stützgliedern (34) angeordnet sind.

6. Rehabilitations- und/oder Trainingsvorrichtung (10) für Equidae nach einem der vorangehenden Ansprüche, umfassend Formregulierungsglieder (50), die geeignet sind, die Bildung im Wesentlichen dauerhafter Verformungen des elastischen Kissens (14) einzuschränken.

## Revendications

1. Dispositif de réhabilitation et/ou d'entraînement (10) pour équidés, notamment les chevaux, comportant au moins un élément de compression (14) et des éléments de connexion (16) pour coupler l'élément de compression (14) avec l'équidé (12), ledit élément de compression (14) comprenant un coussin élastique (14) apte à être appliqué sur une zone de compression de l'équidé (12) incluant au moins une partie de la croupe (24) pour exercer une action de compression sur une telle zone au cours d'une allure de l'équidé, lesdits éléments de connexion comprenant une pluralité d'éléments de connexion élastiques (16) ayant chacun une partie d'extrémité reliée au coussin élastique (14) et une partie d'extrémité opposée connectée ou pouvant être connectée à des éléments de support (34) apte à être couplée à l'équidé à une certaine distance dudit coussin,
ledit dispositif (10) étant **caractérisé en ce que** le coussin élastique est un coussin gonflable qui est formé comme une boucle fermée s'étendant autour d'une ouverture traversante, qui est adapté pour être disposé pour faire face à une partie de jonction (23) de la queue (22) de l'équidé et qui est adapté pour que ladite queue passe à travers lui, le coussin élastique et les éléments de connexion élastiques étant tels que pour former globalement un système élastique apte à adopter une configuration dans laquelle lesdits éléments de connexion (16) et ledit coussin (14) sont déformés élastiquement pour exercer sur ladite zone de compression, une force de réaction élastique apte à provoquer une flexion d'au moins l'articulation lombo-sacrée de l'équidé.

2. Dispositif de réhabilitation et/ou d'entraînement (10) pour équidés selon l'une quelconque des revendications précédentes, dans lequel lesdits éléments de liaison élastique (16) comprennent un premier élément de connexion contraint ou pouvant être contraint à une partie de fixation (26) relativement au centre dudit coussin et un deuxième et un troisième élément de connexion qui sont respectivement contraints ou pouvant être contraints à deux parties de fixation latérales (28, 32) qui sont disposées sur deux côtés qui sont opposés par rapport à la partie centrale de fixation (26).

3. Dispositif de réhabilitation et/ou d'entraînement (10) pour équidés selon l'une quelconque des revendications précédentes, dans lequel ledit coussin élastique (14) est formé comme une boucle fermée aplatie de manière à avoir une forme étroite et allongée.

4. Dispositif de réhabilitation et/ou d'entraînement (10) pour équidés selon l'une quelconque des revendications précédentes, dans lequel ledit coussin (14) est un coussin qui est ou qui peut être gonflé avec du gaz.

5. Dispositif de réhabilitation et/ou d'entraînement (10) pour équidés selon l'une quelconque des revendications précédentes, dans lequel lesdits éléments de connexion (16) sont disposés entre ledit élément de compression (14) et lesdits éléments de support (34).

6. Dispositif de réhabilitation et/ou d'entraînement (10) pour équidés selon l'une quelconque des revendications précédentes, comprenant des éléments de contrôle de forme (50) aptes à limiter la formation de déformations sensiblement permanentes dudit coussin élastique (14).
